# EUROPEAN PATENT APPLICATION

(11) **EP 1 533 351 A1**
(43) Date of publication of application: **25.05.2005**
(21) Application number: 04025868.3
(22) Date of filing: 01.11.2004
(51) Int. Cl.: C09D 11/10, C08F 8/00

(54) **Aromatic carboxylic acid-modified cyclopentadine based hydrocarbon resins**

(30) Priority: 18.11.2003 US 715793
(71) Applicant: MeadWestvaco Corporation, Stamford, CT 06905 (US)
(72) Inventor: Southard, John Lowell II, Charleston, SC 29414 (US); Hutter, Frederick, G., Charleston, SC 29407 (US)
(74) Representative: Hepworth, John Malcolm

(57) **Abstract**

This invention relates to aromatic carboxylic acid-modified cyclopentadiene-based hydrocarbon resins and phenolated aromatic carboxylic acid-modified cyclopentadiene-based hydrocarbon resins and methods for producing the same. More particularly, this invention concerns methods of producing cyclopentadiene-based hydrocarbon resins and phenolated cyclopentadiene-based hydrocarbon resins that are modified by incorporation of aromatic carboxylic acids to improve their compatibility with alkyd resins while achieving softening points, rheological properties, and hydrocarbon solubilities desirable for use in the formulation of printing inks.

## Description

### FIELD OF INVENTION

This invention relates to aromatic carboxylic acid-modified cyclopentadiene-based hydrocarbon resins and phenolated aromatic carboxylic acid-modified cyclopentadiene-based hydrocarbon resins and methods for producing the same. More particularly, this invention concerns methods of producing cyclopentadiene-based hydrocarbon resins and phenolated cyclopentadiene-based hydrocarbon resins that are modified by incorporation of aromatic carboxylic acids to improve their compatibility with alkyd resins while achieving softening points, rheological properties, and hydrocarbon solubilities desirable for use in the formulation of printing inks.

### BACKGROUND OF THE INVENTION

Resinous materials made by the thermal polymerization of cyclopentadiene-rich hydrocarbon feedstocks have been widely used in lithographic ink vehicles. Typically, such feedstocks include byproduct streams from petroleum refining that contain substantial amounts of cyclopentadiene, dicyclopentadiene, methylcyclopentadienes, dimers of methylcyclopentadienes, and cross-dimers of cyclopentadiene and methylcyclopentadienes. Usually these streams are predominantly composed of dicyclopentadiene and other dimers, since the dimers are more stable at room temperature. However, during processing the dimers revert to monomer before subsequently polymerizing. A description of these types of resins can be found in the Kirk-Othmer Encyclopedia of Chemical Technology, 4^{th} Edition, volume 13, pp. 729-731, which is incorporated herein by reference.

The formulation latitude of hydrocarbon resins in lithographic and other printing inks tends to be limited by a balance of factors. If the hydrocarbon resins have sufficiently low molecular weights to be readily soluble in ink oils (i.e., high boiling-point hydrocarbon solvents) and compatible with other ink components such as vegetable oils or alkyd resins, the resins tend to have softening points that are too low to make fast-drying inks and solution viscosities that are too low to give formulated inks the paste-like consistency desired for printing. Sparging with steam or nitrogen, or alternately vacuum stripping to remove unreacted components, can increase resin softening points and solution viscosities, but these processes can lead to lower solubility and incompatibility with other ink components. Furthermore, the prolonged processing time associated with sparging or the increasing of the molecular weight often results in a darkening of the color of the final resinous product, which is undesirable in a resin used in ink production.

It is known in the art that the softening points, viscosities, and alkyd compatibility of cyclopentadiene-based hydrocarbon resins can be improved by modifying them with agents such as other olefins, alkylphenols, fatty acids, rosin, α,β-unsaturated carboxylic acids and anhydrides, or various combinations thereof. Such modification may be carried out concurrently with the polymerization of the cyclopentadiene or subsequent to the polymerization.

For example, U.S. Patent No. 4,433,100 teaches the incorporation of olefins other than cyclopentadiene into the cyclopentadiene feed as well as modification of the resin with rosin or fatty acids. Aliphatic carboxylic acids such as rosin acids or fatty acids can react via an addition reaction with the norbornyl unsaturation in the cyclopentadiene polymers to form ester linkages. The reaction of cyclopentadiene-based resins with phenolic-modified rosin esters is disclosed in U.S. Patent No. 5,391,615.

The modification of cyclopentadiene-based resins by incorporation of maleic anhydride is disclosed in U.S. Patent No. 4,189,410. It is known that such α,β-ethylenically unsaturated carboxylic acids and anhydrides can react with cyclopentadiene-based resins via a Diels-Alder or ene-type addition reaction.

The Diels-Alder adduction of cyclopentadiene-based resins with maleic anhydride or fumaric acid followed by esterification with alcohols is taught in U.S. Patent No. 4,574,057. Likewise, U.S. Patent No. 5,587,007 discloses the Diels-Alder adduction of cyclopentadiene-based resins with fumaric acid or maleic anhydride together with addition of phenols and fatty acids.

Despite the extensive research which has been conducted in the field, it is still often difficult to achieve the balance of viscosity, softening point, and alkyd compatibility which is often preferred in a resin for use in inks (particularly lithographic, intaglio, letter-press, and other paste-like inks) that are suitable for modem printing presses. Modification with alkylphenols, for example, tends to enhance compatibility with alkyd resins but depresses the softening point when the alkyl groups are relatively large, or when the phenols are used in sufficient quantity as to excessively limit the extent of the cyclopentadiene polymerization (thereby limiting molecular weight gain). Also, the use of alkylphenols is being examined on environmental grounds due to their being estrogen mimics. Partial or complete replacement of the phenols in such modified hydrocarbon resins would be highly desirable.

Therefore, it is the object of the present invention to provide a method for producing aromatic carboxylic acid-modified cyclopentadiene-based hydrocarbon resins.

Another object is to provide a method for producing aromatic carboxylic acid-modified cyclopentadiene-based hydrocarbon resins that have the alkyd compatibility of alkylphenol-modified hydrocarbon resins while maintaining solution viscosities and softening points suitable for printing ink formulations.

It is a further object of the invention to provide a method for producing aromatic carboxylic acid-modified cyclopentadiene-based hydrocarbon resins with desired alkyd compatibilities, solution viscosities, and softening points which reduces reaction times over common methods of producing traditional resins, thereby allowing the production of lighter-colored resins.

### SUMMARY OF THE INVENTION

The objects of this invention are met by producing aromatic carboxylic acid-modified cyclopentadiene-based hydrocarbon resins and phenolated aromatic carboxylic acid-modified cyclopentadiene-based hydrocarbon resins via the reaction of at least one aromatic carboxylic acid with at least one cyclopentadienyl compound and, where desired, additional reactants. These resins can be dissolved in hydrocarbon solvent to produce varnishes which are suitable for use in the production of printing inks. The resins have the balance of solution viscosity, softening point, and alkyd compatibility which is desirable for modem printing presses. Also, the complete or partial replacement of alkylphenols in these resins is advantageous on environmental grounds.

It is believed that the alkyd compatibility imparted to cyclopentadiene-based hydrocarbon resins by reaction with alkylphenols is due in part to the aromatic nature of the phenols, which gives them an affinity for the aromatic ester groups such as phthalates, or isophthalates that are usually found in alkyds. We have now found that such aromatic character can also be imparted by reaction of the hydrocarbon resins with aromatic carboxylic acids. While not being bound to a specific mechanism or theory, we believe that the aromatic carboxylic acids react with the norbornyl unsaturation in the hydrocarbon resin by an addition reaction analogous to that which is known in the prior art for aliphatic carboxylic acids such as fatty acids and rosin acids. This belief is based on the reduction in acid number that occurs during the course of the reaction of the aromatic carboxylic acid with the hydrocarbon. In the present case of adduction with the aromatic acids, this should produce aromatic ester linkages, which should be especially compatible with similar groups in alkyd resins and other aromatic rich components.

### DESCRIPTION OF THE PREFERRED EMBODIMENT

A process for producing the aromatic carboxylic acid-modified, cyclopentadiene-based hydrocarbon resins of the present invention comprises reacting:
A) from about 65.0% to about 99.5% by total weight of the reactants of a first component comprising:
   1) from about 50.0% to about 100.0% by weight of the first component of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
   2) up to about 50.0% by weight of the first component of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof, and
B) from about 0.5% to about 35.0% by total weight of the reactants of a second component comprising at least one aromatic carboxylic acid,
at a temperature in the range of about 240°C to about 290° C for a time sufficient to produce the aromatic carboxylic acid-modified, cyclopentadiene-based hydrocarbon resins.

A preferred process for producing the aromatic carboxylic acid-modified, cyclopentadiene-based hydrocarbon resins of the present invention comprises reacting:
A) from about 90.0% to about 99.0% by total weight of the reactants of a first component comprising:
   1) from about 50.0% to about 100.0% by weight of the first component of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
   2) up to about 50.0% by weight of the first component of at least one member selected from the group consisting of non-cyclopentadienyl olefinic monomers, acrylic monomers, α,β-unsaturated carboxylic acids, α,β-unsaturated anhydrides, fatty acids, rosins, and combinations thereof, and
B) from about 1.0% to about 10.0% by total weight of the reactants of a second component comprising at least one aromatic carboxylic acid,
at a temperature in the range of about 240°C to about 290°C for a time sufficient to produce the aromatic carboxylic acid-modified, cyclopentadiene-based hydrocarbon resins.

Where desired, a process may be utilized wherein traditionally employed alkylphenol is only partially replaced or supplemented with aromatic carboxylic acid. While this process does not give the aggregate environmental advantages intrinsic with the complete elimination of alkylphenols, the process does produce phenolated aromatic carboxylic acid-modified cyclopentadiene-based hydrocarbon resins which exhibit improved balances of softening point and viscosity with alkyd compatibility so long as the aromatic carboxylic acid content in the resulting resins is sufficiently high.

Therefore, a process for producing the aromatic carboxylic acid-modified, cyclopentadiene-based hydrocarbon resins of the present invention comprises reacting:
A) from about 65.0% to about 99.5% by total weight of the reactants of a first component comprising:
   1) from about 50.0% to about 99.0% by weight of the first component of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof,
   2) up to about 50.0% by weight of the first component of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof,
   3) from about 1.0% to about 50.0% by weight of the first component of at least one alkylphenol, and
   4) a catalytic amount of at least one acid catalyst, and
B) from about 0.5% to about 35.0% by total weight of the reactants of a second component comprising at least one aromatic carboxylic acid,
at a temperature in the range of about 240°C to about 290°C for a time sufficient to produce the aromatic carboxylic acid-modified, cyclopentadiene-based hydrocarbon resins.

A preferred process for producing the aromatic carboxylic acid-modified, cyclopentadiene-based hydrocarbon resins of the present invention comprises reacting:
A) from about 90.0% to about 99.0% by total weight of the reactants of a first component comprising:
   1) from about 50.0% to about 98.0% by weight of the first component of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof,
   2) up to about 50.0% by weight of the first component of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof,
   3) from about 1.0% to about 50.0% by weight of the first component of at least one alkylphenol, and
   4) a catalytic amount of at least one acid catalyst, and
B) from about 1.0% to about 10.0% by total weight of the reactants of a second component comprising at least one aromatic carboxylic acid,
at a temperature in the range of about 240°C to about 290°C for a time sufficient to produce the aromatic carboxylic acid-modified, cyclopentadiene-based hydrocarbon resins.

Where desired, the above-noted one step processes may be conducted in two steps. In these processes, the first component is heated to a temperature in the range of about 240°C to about 290°C for a time sufficient to produce a hydrocarbon resin. The resulting hydrocarbon resin is then reacted the aromatic carboxylic acid component at a temperature in the range of about 240°C to about 290°C for a time sufficient to produce the aromatic carboxylic acid-modified, cyclopentadiene-based hydrocarbon resins.

According, a two-step process for producing the aromatic carboxylic acid-modified, cyclopentadiene-based hydrocarbon resins of the present invention comprises:
A) reacting in a first step:
   1) from about 50.0% to about 100.0% by weight of the first step reactants of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
   2) up to about 50.0% by weight of the first step reactants of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof, and
   at a temperature in the range of about 240°C to about 290°C for a time sufficient to produce a hydrocarbon resin, and
B) reacting in a second step:
   1) from about 65.0% to about 99.5% by total weight of the second step reactants of the hydrocarbon resin of step one, and
   2) from about 0.5% to about 35.0% by total weight of the second step reactants of at least one aromatic carboxylic acid,
at a temperature in the range of about 200°C to about 275°C for a time sufficient to produce the aromatic carboxylic acid-modified, cyclopentadiene-based hydrocarbon resins.

A preferred two-step process for producing the aromatic carboxylic acid-modified, cyclopentadiene-based hydrocarbon resins of the present invention comprises:
A) reacting in a first step:
   1) from about 50.0% to about 100.0% by weight of the first step reactants of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
   2) up to about 50.0% by weight of the first step reactants of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof, and
   at a temperature in the range of about 240°C to about 290°C for a time sufficient to produce a hydrocarbon resin, and
B) reacting in a second step:
   1) from about 90.0% to about 99.0% by total weight of the second step reactants of the hydrocarbon resin of step one, and
   2) from about 1.0% to about 10.0% by total weight of the second step reactants of at least one aromatic carboxylic acid,
at a temperature in the range of about 200°C to about 275°C for a time sufficient to produce the aromatic carboxylic acid-modified, cyclopentadiene-based hydrocarbon resins.

Where desired, a two-step process may be utilized wherein traditionally employed alkylphenol is only partially replaced with aromatic carboxylic acid. While this process does not give the aggregate environmental advantages intrinsic with the complete elimination of alkylphenols, the process does produce resins which exhibit improved balances of softening point and viscosity with alkyd compatibility so long as the aromatic carboxylic acid content in the resulting resins is sufficiently high.

According, a two-step process for producing the aromatic carboxylic acid-modified, cyclopentadiene-based hydrocarbon resins of the present invention comprises:
A) reacting in a first step:
   1) from about 50.0% to about 99.0% by weight of the first step reactants of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof,
   2) up to about 50.0% by weight of the first step reactants of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof,
   3) from about 1.0% to about 50.0% by weight of the first step reactants of at least one alkylphenol, and
   4) a catalytic amount of at least one acid catalyst,
   at a temperature in the range of about 240°C to about 290°C for a time sufficient to produce a hydrocarbon resin, and
B) reacting in a second step:
   1) from about 65.0% to about 99.5% by total weight of the second step reactants of the hydrocarbon resin of step one, and
   2) from about 0.5% to about 35.0% by total weight of the second step reactants of at least one aromatic carboxylic acid,
at a temperature in the range of about 200°C to about 275°C for a time sufficient to produce the aromatic carboxylic acid-modified, cyclopentadiene-based hydrocarbon resins.

A preferred two-step process for producing the aromatic carboxylic acid-modified, cyclopentadiene-based hydrocarbon resins of the present invention comprises:
A) reacting in a first step:
   1) from about 50.0% to about 98.0% by weight of the first step reactants of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof,
   2) up to about 50.0% by weight of the first step reactants of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof,
   3) from about 1.0% to about 50.0% by weight of the first step reactants of at least one alkylphenol, and
   4) a catalytic amount of at least one acid catalyst,
   at a temperature in the range of about 240°C to about 290°C for a time sufficient to produce a hydrocarbon resin, and
B) reacting in a second step:
   1) from about 90.0% to about 99.0% by total weight of the second step reactants of the hydrocarbon resin of step one, and
   2) from about 1.0% to about 10.0% by total weight of the second step reactants of at least one aromatic carboxylic acid,
at a temperature in the range of about 200°C to about 275°C for a time sufficient to produce the aromatic carboxylic acid-modified, cyclopentadiene-based hydrocarbon resins.

It is preferred that the aromatic carboxylic acid employed in the present invention contain a total of from one to about three carbocyclic and/or heterocyclic aromatic rings to which are attached a total of from one to about four carboxyl groups. Typical examples of such aromatic carboxylic acids include, but are not limited to, the following: benzoic acid, alkyl-substituted benzoic acids (such as o-toluic acid, m-toluic acid, p-toluic acid, p-tert-butylbenzoic acid, and the like), alkoxy-substituted benzoic acids (such as p-anisic acid, 4-octyloxybenzoic acid, and the like), halogenated benzoic acids (such as m-chlorobenzoic acid, phthalic acid, isophthalic acid, terephthalic acid, 1-naphthoic acid, 2-naphthoic acid, trimellitic acid, pyromellitic acid, benzophenonetetracarboxylic acid, and the like), and heterocyclic acids (such as picolinic acid, nicotinic acid, and the like). The compatibility, softening point, and viscosity desired for the resin solution formulation will determine the choice of the aromatic carboxylic acid(s) employed in the process. Generally, alkyl-substituted or alkoxy-substituted aromatic carboxylic acids (such as p-tert-butylbenzoic acid and the like) will give greater compatibility with other varnish components. Aromatic carboxylic acids with multiple carboxyl groups will generally yield higher viscosities and softening points.

In the single step processes of the present invention, while from about 0.5% to about 35.0% by total weight of the reactants may be the second component comprising at least one aromatic carboxylic acid, a preferred range of aromatic carboxylic acid is from about 1.0% to about 10.0% by total weight of the reactants. Likewise, while from about 65.0% to about 99.5% by total weight of the reactants in the single step processes may be the first component, a preferred range of the first component is from about 90.0% to about 99.0% by total weight of the reactants.

In the two-step processes of the present invention, while from about 0.5% to about 35.0% by total weight of the second-step reactants may be at least one aromatic carboxylic acid, a preferred range of aromatic carboxylic acid is from about 1.0% to about 10.0% by total weight of the reactants. Likewise, while from about 65.0% to about 99.5% by total weight of the second-step reactants may be the hydrocarbon resin of step one, a preferred range of hydrocarbon resin is from about 90.0% to about 99.0% by total weight of the second-step reactants.

In carrying out the process of the present invention, it is preferred that at least one hydrocarbon feedstock stream (usually resulting from petroleum refining) be employed to supply the cyclopentadienyl compound. Hydrocarbon feedstock streams suitable for use in the present invention contain a substantial amount (typically at least about 80.0%) of cyclopentadiene, dicyclopentadiene, methylcyclopentadienes, dimers of methylcyclopentadienes, cross-dimers of cyclopentadiene and methylcyclopentadienes, and combinations thereof. Suitable hydrocarbon feedstock streams may also include an amount (typically up to about 10.0%) of acyclic hydrocarbon containing five and/or six carbon atoms (such as isoprene, piperylene, and the like), and other small amounts of unreactive species (such as various pentane isomer, hexane isomers, and the like). The use of a purified dicyclopentadiene stream is particularly preferred in the present invention.

Where desired, up to about 50.0% by weight of the first component employed in the single step processes of the present invention may consist of materials which have traditionally been incorporated into cyclopentadiene-based hydrocarbon resins. Likewise, up to about 50.0% by weight of the first step reactants employed in the two-step processes of the present invention may consist of materials which have traditionally been incorporated into cyclopentadiene-based hydrocarbon resins. Such suitable additive materials which are co-reactive with cyclopentadienyl compounds include, but are not limited to, the following: non-cyclopentadienyl olefinic monomers, acrylic monomers, α,β-unsaturated carboxylic acids, α,β-unsaturated anhydrides, fatty acids, rosins, and combinations thereof. Preferred optional non-cyclopentadienyl olefinic monomers which are suitable for use in the present invention include petroleum byproduct streams (commonly called C-9 streams in the art) that contain substantial amounts of styrene and/or substituted styrenes. Preferred optional α,β-unsaturated carboxylic acids and α,β-unsaturated anhydrides include fumaric acid, maleic acid, maleic anhydride, and the like. Preferred optional fatty acids include saturated monocarboxylic acids containing from about 8 to about 24 carbon atoms, unsaturated monocarboxylic acids containing from about 8 to about 24 carbon atoms, and combinations thereof. Preferred optional fatty acids include unsaturated aliphatic monocarboxylic acids derived from tall oil or vegetable oils (such as linseed oil, tung oil, and the like). Preferred optional rosins are tall oil rosin, gum rosin, wood rosin, and mixtures thereof.

Where employed, alkylphenols that are suitable for use in the present invention include, but are not limited to, the following: p-tert-butylphenol, p-tert-amylphenol, p-tert-octylphenol, nonylphenol, dodecylphenol, dinonylphenol, p-cumylphenol, bisphenol A, and mixtures thereof. The presence of a phenol can increase the reaction rate of the aromatic carboxylic acid with the hydrocarbon, particularly in the case of acids such as terephthalic acid that have negligible solubility in the hydrocarbon feedstock.

The presence of an acid catalyst is required for the attachment of the phenol to the hydrocarbon resin via an alkylation reaction. Thus a catalytic amount of at least one acid catalyst is employed when an alkylphenol is utilized. A preferred catalytic amount is from about 0.005% to about 1.0 % by total weight of either the first component reactants in the single step processes or the reactants in the first reaction of the two-step processes. Suitable acid catalysts include, but are not limited to, mineral acids (such as sulfuric acid, phosphoric acid, hydrochloric acid, and the like), sulfonic acids (such as methanesulfonic acid, toluenesulfonic acid, and the like), and combinations thereof.

In the single step processes, a reaction temperature in the range of about 240°C to about 290°C is employed for a time sufficient to produce the produce the aromatic carboxylic acid-modified, cyclopentadiene-based hydrocarbon resins of the present invention. It is preferred that a reaction temperature in the range of about 245°C to about 285°C be utilized, and it is more preferred that the temperature be in the range of about 260°C to about 275°C. Common reaction times typically range from about 0.5 hours to about 30 hours.

In the first step of the two-step processes, a reaction temperature in the range of about 240°C to about 290°C is employed for a time sufficient to produce the produce the step one hydrocarbon resins. It is preferred that a reaction temperature in the range of about 245°C to about 285°C be utilized, and it is more preferred that the temperature be in the range of about 260°C to about 275°C. Common reaction times typically range from about 0.5 hours to about 15 hours.

In the second step of the two-step processes, a reaction temperature in the range of about 200°C to about 275°C is employed for a time sufficient to produce the aromatic carboxylic acid-modified, cyclopentadiene-based hydrocarbon resins of the present invention. It is preferred that a reaction temperature in the range of about 210°C to about 265°C be utilized, and it is more preferred that the temperature be in the range of about 220°C to about 250°C. Common reaction times typically range from about 0.5 hours to about 15 hours.

In a general example of the single step process of the present invention, the aromatic carboxylic acid(s), the cyclopentadienyl compound(s), and where desired, the additive(s) and/or the alkylphenol(s) with acidic catalyst(s) are charged to a pressure vessel and heated with stirring to a temperature in the range of about 240°C to about 290°C (preferably from about 260°C to about 275°C) over a period of from about 0.5 to about 5 hours and held at this temperature for from about 1.5 to about 24 hours (preferably from about 2 to about 6 hours). After this period, any residual pressure on the reactor is released. Where desired, the resulting aromatic carboxylic acid-modified cyclopentadiene-based hydrocarbon resin may be sparged (typically with nitrogen or steam) or alternatively vacuum stripped to remove any low molecular weight unreacted species. The inclusion of the aromatic carboxylic acid component in the reaction mixture both reduces the amount of sparging which may be required to obtain the desired resin viscosity and softening point characteristics while helping to maintain resin alkyd compatibility following the sparging.

In a general example of the two-step process of the present invention, the cyclopentadienyl compound(s), and where desired, the additive(s) and/or the alkylphenol(s) with acidic catalyst(s) are charged to a pressure vessel and heated with stirring to a temperature in the range of about 240°C to about 290°C (preferably from about 260°C to about 275°C) over a period of from about 0.5 to about 5 hours and held at this temperature for from about 1.5 to about 10 hours (preferably from about 2 to about 6 hours) to produce hydrocarbon resin. After this period, the aromatic carboxylic acid(s) is added to the reactor, and heating is continued at a temperature in the range of about 200°C to about 275°C (preferably from about 210°C to about 265°C) over a period of from about 0.5 to about 5 hours and held at this temperature for from about 1.5 to about 15 hours (preferably from about 2 to about 6 hours). Thereafter, any residual pressure on the reactor is released. Where desired, the resulting aromatic carboxylic acid-modified cyclopentadiene-based hydrocarbon resin may be sparged (typically with nitrogen or steam) or alternatively vacuum stripped to remove any low molecular weight unreacted species. The inclusion of the aromatic carboxylic acid component in the reaction mixture both reduces the amount of sparging which may be required to obtain the desired resin viscosity and softening point characteristics while helping to maintain resin alkyd compatibility following the sparging.

The aromatic carboxylic acid-modified cyclopentadiene-based hydrocarbon resins of the invention are suitable for making varnishes that can be used for the production of printing inks. Such varnishes can be made by dissolving the aromatic carboxylic acid-modified cyclopentadiene-based hydrocarbon resins in high boiling point hydrocarbon solvents (commonly known in the art as ink oils). Any hydrocarbon solvent commonly used in the production of varnishes which is compatible with the aromatic carboxylic acid-modified cyclopentadiene-based hydrocarbon resins of the invention may be utilized to produce the varnishes of the present invention. Examples of such typical hydrocarbon solvents include ink oils sold by the Magie Brothers Oil Company under the trade name MAGIESOL and by the Exxon Mobile Corporation under the trade name EXXPRINT. Where desired, the aromatic carboxylic acid-modified cyclopentadiene-based hydrocarbon resin varnishes may also contain additional components, such as vegetable oils (such as linseed oil, tung oil, soybean oil, and the like), alkyd resins, rosin-based resins, phenolic-modified rosin resins, other hydrocarbon resins, or combinations thereof.

Printing inks can be made by dispersing pigments in such aromatic carboxylic acid-modified cyclopentadiene-based hydrocarbon resins varnishes by any of the means commonly used in the art, including shot milling, three-roll milling, or flushing. Any pigments commonly used in the production of printing inks which are compatible with the aromatic carboxylic acid-modified cyclopentadiene-based hydrocarbon varnishes of the present invention may be utilized.

As appreciated in the art, the exact components and properties of components desired for any coating application can vary and, therefore, routine experimentation may be required to determine the optional components and proportions of components for a given application and desired properties.

The following examples are provided to further illustrate the present invention and are not to be construed as limiting the invention in any manner.

### EXAMPLE 1

A benzoic acid-modified hydrocarbon resin was prepared as follows. To a 250 ml mini-Parr pressure reactor were added 190 grams of DCPD-101 (a hydrocarbon feedstock commercially available from Lyondell Corporation that consists primarily of dicyclopentadiene) and 14.7 grams of benzoic acid. The pressure reactor was sealed, and stirring was begun. The reaction mixture was heated from room temperature (18-25°C) to 265°C over a period of 1 hour, and the reaction was held at that temperature 3.5 hours. The reaction gained pressure until it peaked at about 100 psi and then proceeded to decrease as the volatile reactants polymerized. After the hold was completed, the reaction was cooled over a period of 15-20 minutes to 200°C and the remaining pressure was vented. The reaction product was poured into an aluminum pan and allowed to cool to room temperature prior to evaluation.

The resulting aromatic carboxylic acid-modified, cyclopentadiene-based hydrocarbon resin was a light yellow, transparent solid resin with a ring and ball softening point of 128.8°C. The resin exhibited a near zero acid number, indicating that nearly all of the benzoic acid reacted into the hydrocarbon polymer. A 50% solids solution was prepared by heating a portion of resin which had been crushed to 190°C in MAGIESOL 47 (an ink oil commercially available from the Magie Brothers Oil Company) with stirring on a hot plate. The resulting solution exhibited a Gardner tube viscosity of 5.5 seconds, and a MAGIESOL 47 tolerance of 103% (10.3 grams of MAGIESOL 47 in 10.0 grams of varnish). The solution mixture was subsequently mixed with a portion of AKA1365 (a #7 grade lithographic alkyd resin commercially available from Akzo Nobel) and found to tolerate approximately 4.0 grams of alkyd per 10 grams resin solution before incompatibility occurred.

### EXAMPLE 2

A p-tert-butylbenzoic acid modified hydrocarbon resin was prepared as follows. To a 250 ml mini-Parr pressure reactor were added 190grams of DCPD-101 (a hydrocarbon feedstock commercially available from Lyondell Corporation that consists primarily of dicyclopentadiene) and 21.5 grams of p-tert-butylbenzoic acid. The pressure reactor was sealed, and stirring was begun. The reaction mixture was heated from room temperature (18-25°C) to 265°C over a period of 1 hour, and the reaction was held at that temperature for 3.5 hours. Reaction pressure peaked at about 126 psi, then decreased as the volatile reactants polymerized. After the hold was completed, the reaction was cooled over a period of 20 minutes to 200°C, and vented to release the remaining pressure. The reaction product was poured into an aluminum pan and allowed to cool to room temperature prior to evaluation.

The resulting aromatic carboxylic acid-modified, cyclopentadiene-based hydrocarbon resin was a transparent yellow solid resin with a ring and ball softening point of 136°C. The resin exhibited a near zero acid number, indicating that nearly all of the p-tert-butylbenzoic acid reacted into the hydrocarbon polymer. A 50% solids solution was prepared by heating a portion of resin which had been crushed to 190°C in MAGIESOL 47 (an ink oil commercially available from the Magie Brothers Oil Company) with stirring on a hot plate. The resulting solution exhibited a Gardner tube viscosity of 4.8 seconds, and a MAGIESOL 47 tolerance of 265% (26.5 grams of MAGIESOL 47 in 10.0 grams of varnish). The solution mixture was subsequently mixed with a portion of AKA1365 (a #7 grade lithographic alkyd resin commercially available from Akzo Nobel) and found to tolerate approximately 4.0 grams of alkyd per 10.0 grams resin solution before incompatibility occurred.

### EXAMPLE 3

An isophthalic acid modified hydrocarbon resin was prepared as follows. To a 250 ml mini-Parr pressure reactor were added 190 grams of DCPD-101 (a hydrocarbon feedstock commercially available from Lyondell Corporation that consists primarily of dicyclopentadiene) and 10 grams of isophthalic acid. The pressure reactor was sealed and stirring was begun. The reaction mixture was heated from room temperature (18-25°C) to 265°C over a period of 1 hour, and the reaction was held at that temperature for 3.5 hours. The reaction pressure peaked at about 130 psi and then proceeded to decrease as the volatile reactants polymerized. After the hold was completed, the reaction was cooled over a period of 20 minutes to 200°C and vented to remove the remaining pressure. The reaction product was poured into an aluminum pan and allowed to cool to room temperature prior to evaluation.

The resulting aromatic carboxylic acid-modified, cyclopentadiene-based hydrocarbon resin was a transparent yellow solid resin with a ring and ball softening point of 136.5°C. The resin exhibited a near zero acid number, indicating that nearly all of the isophthalic acid had reacted into the hydrocarbon polymer. A 50% solids solution was prepared by heating a portion of resin which had been crushed to 190°C in MAGIESOL 47 (an ink oil commercially available from the Magie Brothers Oil Company) with stirring on a hot plate. The resulting solution exhibited a Gardner tube viscosity of 7.6 seconds, and a MAGIESOL 47 tolerance of 63% (6.3 grams of MAGIESOL 47 in 10.0 grams of varnish). The solution mixture was subsequently mixed with a portion of AKA1365 (a #7 grade lithographic alkyd resin commercially available from Akzo Nobel) and found to tolerate between 3.0 and 6.0 grams of alkyd per 10.0 grams resin solution before incompatibility occurred.

### EXAMPLE 4

A hydrocarbon resin modified with isophthalic acid and nonylphenol was prepared as follows. To a 250 ml mini-Parr pressure reactor was added 190.0 grams of DCPD-101 (a hydrocarbon feedstock commercially available from Lyondell Corporation that consists primarily of dicyclopentadiene), 40.0 grams of nonylphenol, and 10.0 grams of isophthalic acid. The pressure reactor was sealed and stirring was begun. The reaction mixture was heated from room temperature (18-25°C) to 265°C over a period of 1 hour, and the reaction was held at that temperature for 3.5 hours. The reaction pressure peaked at about 126 psi and then proceeded to decrease as the volatile reactants polymerized. After the hold was completed, the reaction was cooled over a period of 20 minutes to 200°C and the remaining pressure was vented. The reaction product was poured into an aluminum pan and allowed to cool to room temperature prior to evaluation.

The resulting aromatic carboxylic acid-modified, cyclopentadiene-based hydrocarbon resin was a transparent yellow solid resin with a ring and ball softening point of 100°C. The resin exhibited a near zero acid number, indicating that nearly all of the isophthalic acid had reacted into the hydrocarbon polymer. A 50% solids solution was prepared by heating a portion of resin which had been crushed to 190°C in MAGIESOL 47 (an ink oil commercially available from the Magie Brothers Oil Company) with stirring on a hot plate. The resulting solution exhibited a Gardner tube viscosity of 2.0 seconds, and a MAGIESOL 47 tolerance greater than 1,000% (more than 100.0 grams of MAGIESOL 47 per 10.0 grams of varnish). The solution mixture was subsequently mixed with a portion of AKA1365 (a #7 grade lithographic alkyd resin commercially available from Akzo Nobel) and found to tolerate between 3.0 and 6.0 grams of alkyd per 10.0 grams resin solution before incompatibility occurred.

### EXAMPLE 5

A hydrocarbon resin modified with isophthalic acid, nonylphenol, p-tert-butylphenol, and p-tert-octylphenol was prepared as follows. To a 2-gallon Parr pressure reactor was added 4420.9 grams of DCPD-101 (a hydrocarbon feedstock commercially available from Lyondell Corporation that consists primarily of dicyclopentadiene), 27.6 grams LRO-90 (an unsaturated hydrocarbon feedstock commercially available from Lyondell Corporation), 919.1 grams of nonylphenol, 65.3 grams of p-tert-octylphenol, 75.1 grams of p-tert-butylphenol, 87.4 grams of isophthalic acid, and 4.66 grams of p-toluenesulfonic acid. The pressure reactor was sealed and stirring was begun. The reaction mixture was heated from room temperature (18-25°C) to 265°C over a period of 1 hour, and the reaction was held at that temperature for 4.5 hours. The reaction pressure peaked at about 90-110 psi and then proceeded to decrease as the volatile reactants polymerized. After the hold was completed, the reaction was cooled over a period of 30-45 minutes to 200°C and the remaining pressure was vented. The reaction product was poured into an aluminum pan and allowed to cool to room temperature prior to evaluation.

The resulting aromatic carboxylic acid-modified, cyclopentadiene-based hydrocarbon resin was a transparent, deep yellow solid resin with a ring and ball softening point of 106.5°C. The resin exhibited a near zero acid number, indicating that nearly all of the isophthalic acid had reacted into the hydrocarbon polymer.

A portion of resin which had been crushed was heated to 215°C in a 33.33% solids mixture with ARLO (alkali-refined linseed oil) to form a varnish that was found to have the following properties: Gardner tube viscosity of 4.3 seconds, a MAGIESOL 47 (an ink oil commercially available from the Magie Brothers Oil Company) tolerance greater than 1,000% (more than 100.0 grams of MAGIESOL 47 per 10.0 grams of varnish), and a Gardner color of 10.

A 50% solids solution was prepared by heating a portion of resin which had been crushed to 190°C in MAGIESOL 47 with stirring on a hot plate. The resulting solution exhibited a Gardner tube viscosity of 1.9 seconds, a MAGIESOL 47 tolerance greater than 1,000%, and a Gardner color of 13. The solution mixture was subsequently mixed with a portion of AKA1365 (a #7 grade lithographic alkyd resin commercially available from Akzo Nobel) and found to tolerate more than 20.0 grams of alkyd per 10.0 grams resin solution without occurrence of incompatibility.

A 60% solids solution was prepared by heating a portion of resin which had been crushed to 190°C in MAGIESOL 470 (an ink oil commercially available from the Magie Brothers Oil Company) with stirring on a hot plate. The resulting solution exhibited a Gardner tube viscosity of 16.4 seconds, a MAGIESOL 47 tolerance greater than 1,000%, and a Gardner color of 12.

### EXAMPLE 6

The following example illustrates nitrogen stripping of an aromatic carboxylic acid-modified, cyclopentadiene-based hydrocarbon resin to increase softening point and viscosity. A portion (3,000 grams) of the solid aromatic carboxylic acid-modified, cyclopentadiene-based hydrocarbon resin product of Example 5 was crushed and heated in a 5-liter round bottom flask equipped with a Dean-Stark trap and condenser to approximately 245°C. The resin system was allowed to stir with continuous heating and nitrogen sparging for 5 hours, and then was poured into aluminum pans and allowed to cool to room temperature.

The resulting aromatic carboxylic acid-modified, cyclopentadiene-based hydrocarbon resin was a transparent, deep yellow solid resin having a ring and ball softening point of 150.7°C and an acid number near zero.

A portion of resin which had been crushed was heated to 215°C in a 33.33% solids mixture with ARLO (alkali-refined linseed oil) to form a varnish that was found to have the following properties: Gardner tube viscosity of 7.8 seconds, a MAGIESOL 47 (an ink oil commercially available from the Magie Brothers Oil Company) tolerance greater than 1,000% (more than 100.0 grams of MAGIESOL 47 per 10.0 grams of varnish), and a Gardner color of 11.

A 50% solids solution was prepared by heating a portion of resin which had been crushed to 190°C in MAGIESOL 47 with stirring on a hot plate. The resulting solution exhibited a Gardner tube viscosity of 7.2 seconds, a MAGIESOL 47 tolerance greater than 1,000%, and a Gardner color of 14. The solution mixture was subsequently mixed with a portion of AKA 1365 (a #7 grade lithographic alkyd resin commercially available from Akzo Nobel) and found to tolerate about 20.0 grams of alkyd per 10.0 grams resin solution before incompatibility occurs.

A 60% solids solution was prepared by heating a portion of resin which had been crushed to 190°C in MAGIESOL 470 (an ink oil commercially available from the Magie Brothers Oil Company) with stirring on a hot plate. The resulting solution exhibited a Gardner tube viscosity of 126.5 seconds, a MAGIESOL 47 tolerance greater than 1,000%, and a Gardner color of 15-.

### EXAMPLE 7

The following example illustrates the reaction of isophthalic acid with a prereacted phenol-modified hydrocarbon resin. To a 2-gallon Parr pressure reactor was added 4420.9 grams of DCPD-101 (a hydrocarbon feedstock commercially available from Lyondell Corporation that consists primarily of dicyclopentadiene), 30.0 grams LRO-90 (an unsaturated hydrocarbon feedstock commercially available from Lyondell Corporation), 920.0 grams of nonylphenol, 65.0 grams of p-tert-octylphenol, 75.0 grams of p-tert-butylphenol, and 4.66 grams of p-toluenesulfonic acid. The pressure reactor was sealed and stirring was begun. The reaction mixture was heated from room temperature (18-25°C) to 265°C over a period of 1 hour, and the reaction was held at that temperature for 4.5 hours. The reaction pressure peaked at about 90-110 psi and then proceeded to decrease as the volatile reactants polymerized. After the hold was completed, the reaction was cooled over a period of 30-45 minutes to 200°C and the remaining pressure was vented. The reaction product was poured into an aluminum pan and allowed to cool to room temperature prior to evaluation.

For comparison purposes, the properties of the reaction product were evaluated at this stage prior to reaction with the aromatic carboxylic acid. The reaction product was a transparent, deep yellow solid resin with a ring and ball softening point of 104.0°C (which was 2.5°C less than the analogous isophthalic acid-containing resin of Example 6).

A portion of resin which had been crushed was heated to 215°C in a 33.33% solids mixture with ARLO (alkali-refined linseed oil) to form a varnish that was found to have the following properties: Gardner tube viscosity of 3.7 seconds, a MAGIESOL 47 (an ink oil commercially available from the Magie Brothers Oil Company) tolerance greater than 1,000% (more than 100.0 grams of MAGIESOL 47 per 10.0 grams of varnish), and a Gardner color of 9.

A 50% solids solution was prepared by heating a portion of resin which had been crushed to 190°C in MAGIESOL 47 with stirring on a hot plate. The resulting solution exhibited a Gardner tube viscosity of 1.9 seconds, a MAGIESOL 47 tolerance greater than 1,000%, and a Gardner color of 11-. The solution mixture was subsequently mixed with a portion of AKA1365 (a #7 grade lithographic alkyd resin commercially available from Akzo Nobel) and found to tolerate 20.0 grams of alkyd per 10.0 grams resin solution without occurrence of incompatibility.

The reaction product was then reacted with isophthalic acid by charging 500 grams of the resin and 7.6 grams of isophthalic acid to a 2-liter, 4-necked, round bottom flask, equipped with a condenser and Dean-Stark trap, an agitator, and a temperature probe. The charge was heated to approximately 245°C and held for about 6 hours with stirring.

The resulting aromatic carboxylic acid-modified, cyclopentadiene-based hydrocarbon resin reaction product was a clear yellow solid resin having a ring and ball softening point of 142.1°C. The resin exhibited a near zero acid number, indicating that nearly all of the isophthalic acid had reacted into the hydrocarbon polymer.

A portion of the resin was crushed and heated to 215°C in a 33.33% solids mixture with ARLO (alkali-refined linseed oil) to form a varnish that was found to have the following properties: Gardner tube viscosity of 8.5 seconds, a MAGIESOL 47 tolerance greater than 1,000%, and a Gardner color of 11+.

A 50% solids solution was prepared by heating a portion of resin which had been crushed to 190°C in MAGIESOL 47 with stirring on a hot plate. The resulting solution exhibited a Gardner tube viscosity of 5.9 seconds, a MAGIESOL 47 tolerance greater than 1,000%, and a Gardner color of 15+. The solution mixture was subsequently mixed with a portion of AKA 1365 alkyd and found to tolerate between 10.0 and 20.0 grams of alkyd per 10.0 grams resin solution before incompatibility occurs.

A 60% solids solution was prepared by heating a portion of resin which had been crushed to 190°C in MAGIESOL 470 (an ink oil commercially available from the Magie Brothers Oil Company) with stirring on a hot plate. The resulting solution exhibited a Gardner tube viscosity of 87 seconds, a MAGIESOL 47 tolerance greater than 1,000%, and a Gardner color of 14.

### EXAMPLE 8

A hydrocarbon resin modified with isophthalic acid and styrene was prepared as follows. To a 250 ml mini-Parr pressure reactor was added 180.0 grams of DCPD-101 (a hydrocarbon feedstock commercially available from Lyondell Corporation that consists primarily of dicyclopentadiene), 20.0 grams of styrene, and 5.0 grams of isophthalic acid. The pressure reactor was sealed and stirring was begun. The reaction mixture was heated from room temperature (18-25°C) to 265°C over a period of 1 hour, and the reaction was held at that temperature for 3.5 hours. The reaction pressure peaked at about 127 psi and then proceeded to decrease as the volatile reactants polymerized. After the hold was completed, the reaction was cooled over a period of 20 minutes to 200°C and the remaining pressure was vented. The reaction product was poured into an aluminum pan and allowed to cool to room temperature prior to evaluation.

The resulting aromatic carboxylic acid-modified, cyclopentadiene-based hydrocarbon resin was a transparent pale yellow solid resin with a ring and ball softening point of 97.2°C. The resin exhibited a zero acid number, indicating that nearly all of the isophthalic acid had reacted into the hydrocarbon polymer.

A portion of resin which had been crushed was heated to 215°C in a 33.33% solids mixture with ARLO (alkali-refined linseed oil) to form a varnish that was found to have the following properties: Gardner tube viscosity of 3.9 seconds and a MAGIESOL 47 (an ink oil commercially available from the Magie Brothers Oil Company) tolerance greater than 1,000% (more than 100.0 grams of MAGIESOL 47 per 10.0 grams of varnish).

A 50% solids solution was prepared by heating a portion of resin which had been crushed to 190°C in MAGIESOL 47 with stirring on a hot plate. The resulting solution exhibited a Gardner tube viscosity of 1.8 seconds, and a MAGIESOL 47 tolerance greater than 1,000%. The solution mixture was subsequently mixed with a portion of AKA 1365 (a #7 grade lithographic alkyd resin commercially available from Akzo Nobel) and found to tolerate between 6.3 and 9.2 grams of alkyd per 10.0 grams resin solution before incompatibility occurred.

### EXAMPLE 9

As a comparative example, a hydrocarbon resin comprised of nonylphenol, p-tert-butylphenol, and p-tert-octylphenol was prepared with subsequent vacuum stripping to reach desired softening point. The resin was not modified with aromatic carboxylic acid.

To a 2-gallon Parr pressure reactor was added 3955 grams of DCPD-101 (a hydrocarbon feedstock commercially available from Lyondell Corporation that consists primarily of dicyclopentadiene), 900.0 grams of nonylphenol, 75.0 grams of p-tert-octylphenol, 75.0 grams of p-tert-butylphenol, and 3.2 grams of p-toluenesulfonic acid. The pressure reactor was sealed and stirring was begun. The reaction mixture was heated from room temperature (18-25°C) to 265°C over a period of 1 hour, and the reaction was held at that temperature for 4.5 hours. The reaction pressure peaked at about 90-110 psi and then proceeded to decrease as the volatile reactants polymerized. After the hold was completed, the reaction was cooled over a period of 30-45 minutes to 200°C and the remaining pressure was vented. The reaction product was poured into an aluminum pan and allowed to cool to room temperature prior to evaluation.

The reaction product was a transparent, yellow solid resin with a ring and ball softening point of 98.1°C. The resin exhibited a near zero acid number.

A portion (2,500 grams) of the solid product was crushed and heated in a 5-liter round bottom flask equipped with a Dean-Stark trap and condenser to approximately 240°C. The resin system was allowed to stir with continuous heating and vacuum stripping for 4 to 5 hours and then poured into aluminum pans and allowed to cool to room temperature. The resulting product was a transparent, yellow solid resin with a ring and ball softening point of 140.7°C and an acid number near zero.

A portion of resin which had been crushed was heated to 215°C in a 33.33% solids mixture with ARLO (alkali-refined linseed oil) to form a varnish that was found to have the following properties: Gardner tube viscosity of 6.8 seconds, a MAGIESOL 47 (an ink oil commercially available from the Magie Brothers Oil Company) tolerance greater than 1,000% (more than 100 grams of MAGIESOL 47 per 10 grams of varnish), and a Gardner color of 12.

A 50% solids solution was prepared by heating a portion of resin which had been crushed to 190°C in MAGIESOL 47 with stirring on a hot plate. The resulting solution exhibited a Gardner tube viscosity of 4.2 seconds, a MAGIESOL 47 tolerance greater than 1,000%, and a Gardner color of 14. The solution mixture was subsequently mixed with a portion of AKA 1365 (a #7 grade lithographic alkyd resin commercially available from Akzo Nobel) and found to tolerate about 20.0 grams of alkyd per 10.0 grams resin solution before incompatibility occurred.

A 60% solids solution was prepared by heating a portion of resin which had been crushed to 190°C in MAGIESOL 470 (an ink oil commercially available from the Magie Brothers Oil Company) with stirring on a hot plate. The resulting solution exhibited a Gardner tube viscosity of 50.6 seconds, a MAGIESOL 47 tolerance greater than 1,000%, and a Gardner color of 12.

### EXAMPLE 10

A hydrocarbon resin modified with isophthalic acid, nonylphenol, p-tert-butylphenol, and p-tert-octylphenol was prepared as follows.

To a 2-gallon Parr pressure reactor was added 4420.9 grams of DCPD-101 (a hydrocarbon feedstock commercially available from Lyondell Corporation that consists primarily of dicyclopentadiene), 27.6 grams LRO-90 (an unsaturated hydrocarbon feedstock commercially available from Lyondell Corporation), 919.1 grams of nonylphenol, 65.3 grams of p-tert-octylphenol, 75.1 grams of p-tert-butylphenol, 87.4 grams of isophthalic acid, and 4.66 grams of p-toluenesulfonic acid. The pressure reactor was sealed and stirring was begun. The reaction mixture was heated from room temperature (18-25°C) to 265°C over a period of 1 hour, and the reaction was held at that temperature for 4.5 hours. The reaction pressure peaked at about 90-110 psi and then proceeded to decrease as the volatile reactants polymerized. After the hold was completed, the reaction was cooled over a period of 30-45 minutes to 200°C and the remaining pressure was vented. The reaction product was poured into an aluminum pan and allowed to cool to room temperature prior to evaluation.

The resulting aromatic carboxylic acid-modified, cyclopentadiene-based hydrocarbon resin was a transparent, deep yellow solid resin with a ring and ball softening point of 112°C. The resin exhibited a near zero acid number, indicating that nearly all of the isophthalic acid had reacted into the hydrocarbon polymer.

A portion (3,000 grams) of the solid product of was crushed and heated in a 5-liter round bottom flask equipped with a Dean-Stark trap and condenser to approximately 240°C. The resin system was allowed to stir with continuous heating and nitrogen sparging for 5 hours and then poured into aluminum pans and allowed to cool to room temperature. The resulting product was a transparent, deep yellow solid resin with a ring and ball softening point of 150.0°C and an acid number near zero.

A portion of resin which had been crushed was heated to 215°C in a 33.33% solids mixture with ARLO (alkali-refined linseed oil) to form a varnish that was found to have the following properties: Gardner tube viscosity of 7.8 seconds, a MAGIESOL 47 (an ink oil commercially available from the Magie Brothers Oil Company) tolerance greater than 1,000% (more than 100.0 grams of MAGIESOL 47 per 10.0 grams of varnish), and a Gardner color of 11.

A 50% solids solution was prepared by heating a portion of resin which had been crushed to 190°C in MAGIESOL 47 with stirring on a hot plate. The resulting solution exhibited a Gardner tube viscosity of 5.9 seconds, a MAGIESOL 47 tolerance greater than 1,000%, and a Gardner color of 13.5. The solution mixture was subsequently mixed with a portion of AKA1365 (a #7 grade lithographic alkyd resin commercially available from Akzo Nobel) and found to tolerate about 20.0 grams of alkyd per 10.0 grams resin solution before incompatibility occurs.

A 60% solids solution was prepared by heating a portion of resin which had been crushed to 190°C in MAGIESOL 470 (an ink oil commercially available from the Magie Brothers Oil Company) with stirring on a hot plate. The resulting solution exhibited a Gardner tube viscosity of 99 seconds, a MAGIESOL 47 tolerance greater than 1,000%, and a Gardner color of 12.

### EXAMPLE 11

In this example, varnishes and heat set printing inks were prepared using the aromatic carboxylic acid-modified, cyclopentadiene-based hydrocarbon resin of Example 10 and, as a comparison, the hydrocarbon resin of Example 9 (which was not modified with aromatic carboxylic acid).

To a 500ml Erlenmeyer Flask was added 65 grams of resin of Example 9 which had been crushed and 35 grams of MAGIESOL 470 (an ink oil commercially available from the Magie Brothers Oil Company). Thereafter a stir bar was added, and the mixture was heated on a hot plate to a temperature of 180-190°C and held at that temperature for 15 minutes after resin was completely cut into the MAGIESOL 470. The resulting varnish ("Varnish A") was allowed to cool prior to evaluation. Following this procedure, the resin of Example 10 was substituted for the Example 9 resin, and the resulting varnish ("Varnish B") was allowed to cool prior to evaluation. The evaluation results are shown in Table I below.

**TABLE I**

| Varnish Properties | | | |
|---|---|---|---|
| Varnish | Gardner Tube Viscosity (seconds) | Gardner Color | M47 Dilution⁽¹⁾ |
| A | 272 | 15 | >1,000% |
| B | 549 | 13 | >1,000% |

| | | | |
|---|---|---|---|
| 1. A dilution of more than 100.0 grams of MAGIESOL 47 (an ink oil commercially available from the Magie Brothers Oil Company) per 10.0 grams of varnish. | | | |

As shown by the data in Table I, the varnish produced from the aromatic carboxylic acid-modified, cyclopentadiene-based hydrocarbon resin (Varnish B) exhibited higher viscosity and improved Gardner Color properties when compared to traditional Varnish A.

To a paint can was added 60 grams of Varnish A, 40 grams of Sun Chemical Corporation's Heatset Rubine Flush (Red 57:1), and 10 grams of MAGIESOL 47. The paint can was gently heated to soften the mixture. The varnish and flush were hand mixed until well combined, then the mixing was completed using a high shear mixture until the resulting heat set ink ("Ink A") was thoroughly homogeneous. Following this procedure, Varnish B was substituted for Varnish A, resulting in a second heat set ink ("Ink B"). The resulting inks were evaluated on a Duke Viscometer (model D-2102), and a Thwing-Albert Inkometer and found to have the properties listed in Table II below

**TABLE II**

| Ink Properties | | | |
|---|---|---|---|
| Ink | Measured yield stress at 2.5 sec⁻¹ (Duke Viscometer) | Viscosity at 2500 sec⁻¹ (Duke Viscometer) | 1' Tack 32°C @400rpm (Inkometer) |
| A | 288.4 Dynes/cm² | 48.9 poise | 5.7 g.m |
| B | 326.9 Dynes/cm² | 67.9 poise | 8.5 g.m |

As the data in Table II shows, the ink produced from the aromatic carboxylic acid-modified, cyclopentadiene-based hydrocarbon resin varnish (Ink B) exhibited more desirable stress, viscosity, and tack properties when compared to Ink A (made from a traditional hydrocarbon varnish).

Many modifications and variations of the present invention will be apparent to one of ordinary skill in the art in light of the above teachings. It is therefore understood that the scope of the invention is not to be limited by the foregoing description, but rather is to be defined by the claims appended hereto.

## Claims

1. A process for producing an aromatic carboxylic acid-modified, cyclopentadiene-based hydrocarbon resin which comprises reacting:
A) from about 65.0% to about 99.5% by total weight of the reactants of a first component comprising:
1) from about 50.0% to about 100.0% by weight of the first component of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
2) up to about 50.0% by weight of the first component of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof, and
B) from about 0.5% to about 35.0% by total weight of the reactants of a second component comprising at least one aromatic carboxylic acid,
at a temperature in the range of about 240°C to about 290°C for a time sufficient to produce the aromatic carboxylic acid-modified, cyclopentadiene-based hydrocarbon resin.

2. The process of claim 1 which further comprises reacting:
A) from about 90.0% to about 99.0% by total weight of the reactants of a first component comprising:
1) from about 50.0% to about 100.0% by weight of the first component of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
2) up to about 50.0% by weight of the first component of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof, and
B) from about 1.0% to about 10.0% by total weight of the reactants of a second component comprising at least one aromatic carboxylic acid,
at a temperature in the range of about 240°C to about 290°C for a time sufficient to produce the aromatic carboxylic acid-modified, cyclopentadiene-based hydrocarbon resins.

3. The process of claim 1 wherein the cyclopentadienyl compound is at least one hydrocarbon feedstock stream.

4. The process of claim 1 wherein the additive is a member selected from the group consisting of C-9 streams containing styrene, C-9 streams containing substituted styrene, fumaric acid, maleic acid, maleic anhydride, saturated monocarboxylic acids containing from about 8 to about 24 carbon atoms, unsaturated monocarboxylic acids containing from about 8 to about 24 carbon atoms, unsaturated aliphatic monocarboxylic acids derived from tall oil, unsaturated aliphatic monocarboxylic acids derived from vegetable oil, tall oil rosin, gum rosin, wood rosin, and combinations thereof.

5. The process of claim 1 wherein the reaction temperature is in the range of about 245°C to about 285°C.

6. The process of claim 1 wherein the aromatic carboxylic acid is a compound containing a total of from one to about three carbocyclic and/or heterocyclic aromatic rings to which are attached a total of from one to about four carboxyl groups.

7. The process of claim 1 wherein the aromatic carboxylic acid is a member selected from the group consisting of benzoic acid, alkyl-substituted benzoic acids, alkoxy-substituted benzoic acids, halogenated benzoic acids, heterocyclic acids, and combinations thereof.

8. The process of claim 7 wherein the aromatic carboxylic acid is a member selected from the group consisting of o-toluic acid, m-toluic acid, p-toluic acid, p-tert-butylbenzoic acid, p-anisic acid, 4-octyloxybenzoic acid, m-chlorobenzoic acid, phthalic acid, isophthalic acid, terephthalic acid, 1-naphthoic acid, 2-naphthoic acid, trimellitic acid, pyromellitic acid, benzophenonetetracarboxylic acid, picolinic acid, nicotinic acid, and combinations thereof.

9. The aromatic carboxylic acid-modified, cyclopentadiene-based hydrocarbon resin produced by the process of claim 1.

10. A varnish comprising the aromatic carboxylic acid-modified, cyclopentadiene-based hydrocarbon resin of claim 9 and at least one hydrocarbon solvent.

11. An ink comprising the varnish of claim 10 and at least one pigment.

12. A process for producing an aromatic carboxylic acid-modified, cyclopentadiene-based hydrocarbon resin which comprises reacting:
A) from about 65.0% to about 99.5% by total weight of the reactants of a first component comprising:
1) from about 50.0% to about 99.0% by weight of the first component of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof,
2) up to about 50.0% by weight of the first component of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof,
3) from about 1.0% to about 50.0% by weight of the first component of at least one alkylphenol, and
4) a catalytic amount of at least one acid catalyst, and
B) from about 0.5% to about 35.0% by total weight of the reactants of a second component comprising at least one aromatic carboxylic acid,
at a temperature in the range of about 240°C to about 290°C for a time sufficient to produce the aromatic carboxylic acid-modified, cyclopentadiene-based hydrocarbon resin.

13. The process of claim 12 which further comprises reacting:
A) from about 90.0% to about 99.0% by total weight of the reactants of a first component comprising:
1) from about 50.0% to about 98.0% by weight of the first component of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof,
2) up to about 50.0% by weight of the first component of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof,
3) from about 1.0% to about 50.0% by weight of the first component of at least one alkylphenol, and
4) a catalytic amount of at least one acid catalyst, and
B) from about 1.0% to about 10.0% by total weight of the reactants of a second component comprising at least one aromatic carboxylic acid,
at a temperature in the range of about 240°C to about 290°C for a time sufficient to produce the aromatic carboxylic acid-modified, cyclopentadiene-based hydrocarbon resins.

14. The process of claim 12 wherein the cyclopentadienyl compound is at least one hydrocarbon feedstock stream.

15. The process of claim 12 wherein the additive is a member selected from the group consisting of C-9 streams containing styrene, C-9 streams containing substituted styrene, fumaric acid, maleic acid, maleic anhydride, saturated monocarboxylic acids containing from about 8 to about 24 carbon atoms, unsaturated monocarboxylic acids containing from about 8 to about 24 carbon atoms, unsaturated aliphatic monocarboxylic acids derived from tall oil, unsaturated aliphatic monocarboxylic acids derived from vegetable oil, tall oil rosin, gum rosin, wood rosin, and combinations thereof.

16. The process of claim 12 wherein the alkylphenol is a member selected from the group consisting of p-tert-butylphenol, p-tert-amylphenol, p-tert-octylphenol, nonylphenol, dodecylphenol, dinonylphenol, p-cumylphenol, bisphenol A, and combinations thereof.

17. The process of claim 12 wherein the acid catalyst is a member selected from the group consisting of mineral acids, sulfonic acids, and combinations thereof.

18. The process of claim 17 wherein the acid catalyst is a member selected from the group consisting of sulfuric acid, phosphoric acid, hydrochloric acid, methanesulfonic acid, toluenesulfonic acid, and combinations thereof.

19. The process of claim 12 wherein the reaction temperature is in the range of about 245°C to about 285°C.

20. The process of claim 12 wherein the aromatic carboxylic acid is a compound containing a total of from one to about three carbocyclic and/or heterocyclic aromatic rings to which are attached a total of from one to about four carboxyl groups.

21. The process of claim 12 wherein the aromatic carboxylic acid is a member selected from the group consisting of benzoic acid, alkyl-substituted benzoic acids, alkoxy-substituted benzoic acids, halogenated benzoic acids, heterocyclic acids, and combinations thereof.

22. The process of claim 21 wherein the aromatic carboxylic acid is a member selected from the group consisting of o-toluic acid, m-toluic acid, p-toluic acid, p-tert-butylbenzoic acid, p-anisic acid, 4-octyloxybenzoic acid, m-chlorobenzoic acid, phthalic acid, isophthalic acid, terephthalic acid, 1-naphthoic acid, 2-naphthoic acid, trimellitic acid, pyromellitic acid, benzophenonetetracarboxylic acid, picolinic acid, nicotinic acid, and combinations thereof.

23. The aromatic carboxylic acid-modified, cyclopentadiene-based hydrocarbon resin produced by the process of claim 12.

24. A varnish comprising the aromatic carboxylic acid-modified, cyclopentadiene-based hydrocarbon resin of claim 23 and at least one hydrocarbon solvent.

25. An ink comprising the varnish of claim 24 and at least one pigment.

26. A two-step process for producing an aromatic carboxylic acid-modified, cyclopentadiene-based hydrocarbon resin which comprises:
A) reacting in a first step:
1) from about 50.0% to about 100.0% by weight of the first step reactants of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
2) up to about 50.0% by weight of the first step reactants of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof, and
at a temperature in the range of about 240°C to about 290°C for a time sufficient to produce a hydrocarbon resin, and
B) reacting in a second step:
1) from about 65.0% to about 99.5% by total weight of the second step reactants of the hydrocarbon resin of step one, and
2) from about 0.5% to about 35.0% by total weight of the second step reactants of at least one aromatic carboxylic acid,
at a temperature in the range of about 200°C to about 275°C for a time sufficient to produce the aromatic carboxylic acid-modified, cyclopentadiene-based hydrocarbon resin.

27. The process of claim 26 which further comprises:
A) reacting in a first step:
1) from about 50.0% to about 100.0% by weight of the first step reactants of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
2) up to about 50.0% by weight of the first step reactants of at least one additive elected from the group consisting of non-cyclopentadienyl olefinic monomers, acrylic monomers, α,β-unsaturated carboxylic acids, α,β-unsaturated anhydrides, fatty acids, rosins, and combinations thereof, and
at a temperature in the range of about 240°C to about 290°C for a time sufficient to produce a hydrocarbon resin, and
B) reacting in a second step:
1) from about 90.0% to about 99.0% by total weight of the second step reactants of the hydrocarbon resin of step one, and
2) from about 1.0% to about 10.0% by total weight of the second step reactants of at least one aromatic carboxylic acid,
at a temperature in the range of about 200°C to about 275°C for a time sufficient to produce the aromatic carboxylic acid-modified, cyclopentadiene-based hydrocarbon resin.

28. The process of claim 26 wherein the cyclopentadienyl compound is at least one hydrocarbon feedstock stream.

29. The process of claim 26 wherein the additive is a member selected from the group consisting of C-9 streams containing styrene, C-9 streams containing substituted styrene, fumaric acid, maleic acid, maleic anhydride, saturated monocarboxylic acids containing from about 8 to about 24 carbon atoms, unsaturated monocarboxylic acids containing from about 8 to about 24 carbon atoms, unsaturated aliphatic monocarboxylic acids derived from tall oil, unsaturated aliphatic monocarboxylic acids derived from vegetable oil, tall oil rosin, gum rosin, wood rosin, and combinations thereof.

30. The process of claim 26 wherein the first step reaction temperature is in the range of about 245°C to about 285°C.

31. The process of claim 26 wherein the second step reaction temperature is in the range of about 210°C to about 265°C.

32. The process of claim 26 wherein the aromatic carboxylic acid is a compound containing a total of from one to about three carbocyclic and/or heterocyclic aromatic rings to which are attached a total of from one to about four carboxyl groups.

33. The process of claim 26 wherein the aromatic carboxylic acid is a member selected from the group consisting of benzoic acid, alkyl-substituted benzoic acids, alkoxy-substituted benzoic acids, halogenated benzoic acids, heterocyclic acids, and combinations thereof.

34. The process of claim 33 wherein the aromatic carboxylic acid is a member selected from the group consisting of o-toluic acid, m-toluic acid, p-toluic acid, p-tert-butylbenzoic acid, p-anisic acid, 4-octyloxybenzoic acid, m-chlorobenzoic acid, phthalic acid, isophthalic acid, terephthalic acid, 1-naphthoic acid, 2-naphthoic acid, trimellitic acid, pyromellitic acid, benzophenonetetracarboxylic acid, picolinic acid, nicotinic acid, and combinations thereof.

35. The aromatic carboxylic acid-modified, cyclopentadiene-based hydrocarbon resin produced by the process of claim 26.

36. A varnish comprising the aromatic carboxylic acid-modified, cyclopentadiene-based hydrocarbon resin of claim 35 and at least one hydrocarbon solvent.

37. An ink comprising the varnish of claim 36 and at least one pigment.

38. A two-step process for producing an aromatic carboxylic acid-modified, cyclopentadiene-based hydrocarbon resin which comprises:
A) reacting in a first step:
1) from about 50.0% to about 99.0% by weight of the first step reactants of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
2) up to about 50.0% by weight of the first step reactants of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof,
3) from about 1.0% to about 50.0% by weight of the first step reactants of at least one alkylphenol, and
4) a catalytic amount of at least one acid catalyst,
at a temperature in the range of about 240°C to about 290°C for a time sufficient to produce a hydrocarbon resin, and
B) reacting in a second step:
1) from about 65.0% to about 99.5% by total weight of the second step reactants of the hydrocarbon resin of step one, and
2) from about 0.5% to about 35.0% by total weight of the second step reactants of at least one aromatic carboxylic acid,
at a temperature in the range of about 200°C to about 275°C for a time sufficient to produce the aromatic carboxylic acid-modified, cyclopentadiene-based hydrocarbon resin.

39. The process of claim 38 which further comprises:
A) reacting in a first step:
1) from about 50.0% to about 98.0% by weight of the first step reactants of at least one cyclopentadienyl compound selected from the group consisting cyclopentadiene, dicyclopentadiene, methylcyclopentadienes, dimers of methylcyclopentadienes, cross-dimers of cyclopentadiene and methylcyclopentadienes, and combinations thereof, and
2) up to about 50.0% by weight of the first step reactants of at least one additive selected from the group consisting of non-cyclopentadienyl olefinic monomers, acrylic monomers, α,β-unsaturated carboxylic acids, α,β-unsaturated anhydrides, fatty acids, rosins, and combinations thereof,
3) from about 1.0% to about 50.0% by weight of the first step reactants of at least one alkylphenol, and
4) a catalytic amount of at least one acid catalyst,
at a temperature in the range of about 240°C to about 290°C for a time sufficient to produce a hydrocarbon resin, and
B) reacting in a second step:
1) from about 90.0% to about 99.0% by total weight of the second step reactants of the hydrocarbon resin of step one, and
2) from about 1.0% to about 10.0% by total weight of the second step reactants of at least one aromatic carboxylic acid,
at a temperature in the range of about 200°C to about 275°C for a time sufficient to produce the aromatic carboxylic acid-modified, cyclopentadiene-based hydrocarbon resin.

40. The process of claim 38 wherein the cyclopentadienyl compound is at least one hydrocarbon feedstock stream.

41. The process of claim 38 wherein the additive is a member selected from the group consisting of C-9 streams containing styrene, C-9 streams containing substituted styrene, fumaric acid, maleic acid, maleic anhydride, saturated monocarboxylic acids containing from about 8 to about 24 carbon atoms, unsaturated monocarboxylic acids containing from about 8 to about 24 carbon atoms, unsaturated aliphatic monocarboxylic acids derived from tall oil, unsaturated aliphatic monocarboxylic acids derived from vegetable oil, tall oil rosin, gum rosin, wood rosin, and combinations thereof.

42. The process of claim 38 wherein the alkylphenol is a member selected from the group consisting of p-tert-butylphenol, p-tert-amylphenol, p-tert-octylphenol, nonylphenol, dodecylphenol, dinonylphenol, p-cumylphenol, bisphenol A, and combinations thereof.

43. The process of claim 38 wherein the acid catalyst is a member selected from the group consisting of mineral acids, sulfonic acids, and combinations thereof.

44. The process of claim 43 wherein the acid catalyst is a member selected from the group consisting of sulfuric acid, phosphoric acid, hydrochloric acid, methanesulfonic acid, toluenesulfonic acid, and combinations thereof.

45. The process of claim 38 wherein the first step reaction temperature is in the range of about 245°C to about 285°C.

46. The process of claim 38 wherein the second step reaction temperature is in the range of about 210°C to about 265°C.

47. The process of claim 38 wherein the aromatic carboxylic acid is a compound containing a total of from one to about three carbocyclic and/or heterocyclic aromatic rings to which are attached a total of from one to about four carboxyl groups.

48. The process of claim 38 wherein the aromatic carboxylic acid is a member selected from the group consisting of benzoic acid, alkyl-substituted benzoic acids, alkoxy-substituted benzoic acids, halogenated benzoic acids, heterocyclic acids, and combinations thereof.

49. The process of claim 48 wherein the aromatic carboxylic acid is a member selected from the group consisting of o-toluic acid, m-toluic acid, p-toluic acid, p-tert-butylbenzoic acid, p-anisic acid, 4-octyloxybenzoic acid, m-chlorobenzoic acid, phthalic acid, isophthalic acid, terephthalic acid, 1-naphthoic acid, 2-naphthoic acid, trimellitic acid, pyromellitic acid, benzophenonetetracarboxylic acid, picolinic acid, nicotinic acid, and combinations thereof.

50. The aromatic carboxylic acid-modified, cyclopentadiene-based hydrocarbon resin of the process of claim 38.

51. A varnish comprising the aromatic carboxylic acid-modified, cyclopentadiene-based hydrocarbon resin of claim 50 and at least one hydrocarbon solvent.

52. An ink comprising the varnish of claim 51 and at least one pigment.
